# EUROPÄISCHE PATENTANMELDUNG

(11) **EP 0 551 649 A2**
(43) Veröffentlichungstag der Anmeldung: **21.07.1993**
(21) Anmeldenummer: 92121966.3
(22) Anmeldetag: 24.12.1992
(51) Int. Cl.: H02J 13/00

(54) **Verteiler für elektrische Installationssysteme**

(30) Priorität: 15.01.1992 DE 4200818
(71) Anmelder: F. Wieland Elektrische Industrie GmbH, D-96052 Bamberg (DE)
(72) Erfinder: Schuir, Alexander, Dipl.-Ing., W-8600 Bamberg (DE)
(74) Vertreter: Matschkur, Götz, Lindner Patent- und Rechtsanwälte

(57) **Zusammenfassung**

Verteiler für ein elektrisches Installationssystem zur gleichzeitigen Energieübertragung sowie zur Steuerung der Verbraucher über eine Datenleitung mit serieller digitaler Datenübertragung (Bus-Leitung), wobei die Steuerinformation über Bus-Koppler von der Bus-Leitung abgenommen und zum Schalten der Leistungsversorgung für die jeweiligen Verbraucher benutzt wird, wobei die mit Steckverbindern zum Einschalten in die Stromversorgungsleitung und die Bus-Leitung versehenen Verteiler mit eingebauten Bus-Kopplern und von diesen angesteuerten, in einem Stromversorgungsabzweig liegenden Schaltgliedern sowie mit nachgeordneten Ausgangssteckverbindern für eine herkömmliche Versorgungsverdrahtung zu den Verbrauchern versehen sind.

## Beschreibung

Die Erfindung bezieht sich auf einen Verteiler für ein elektrisches Installationssystem zur gleichzeitigen Energieübertragung sowie zur Steuerung der Verbraucher über eine Datenleitung mit serieller digitaler Datenübertragung (Bus-Leitung), wobei die Steuerinformation über Bus-Koppler von der Bus-Leitung abgenommen und zum Schalten der Leistungsversorung für die jeweiligen Verbraucher benutzt wird.

Konventionelle Elektroinstallationen mit einer Vielzahl von Funktionen, wie z.B. die elektrische Energieübertragung, die Heizungs-, Licht- oder Rolladensteuerung, stoßen oft an Grenzen der Funktion und Machbarkeit. Neue Wege geht man dabei mit den vorstehend angesprochenen elektrischen Installationssystemen, bei denen quasi "intelligente" Verbraucher vorgesehen sind, d.h. den einzelnen Verbrauchern sind Bus-Koppler zugeordnet, die die Steuerinformationen auf der Bus-Leitung auswerten und auf diese Art und Weise beispielsweise von einer zentralen Stelle aus alle Rolladen oder alle Beleuchtungen eines großen Bürohochhauses ohne besondere aufwendige Steuerungsverdrahtung steuern. Man hat lediglich die zweiadrige Bus-Leitung, die beispielsweise gemeinsam mit der Stromleitung verlegt werden kann.

Der Nachteil des Systems besteht darin, daß die "intelligenten" Verbraucher gegenüber normalen Verbrauchern ohne Bus-Koppler sehr viel teurer sind und daß darüber hinaus die Umrüstung vorhandener Installationssysteme äußerst kompliziert ist.

Der Erfindung liegt daher die Aufgabe zugrunde, ein elektrisches Installationssystem der eingangs beschriebenen Art zu vereinfachen dahingehend, daß keine besonders ausgerüsteten Verbraucher erforderlich sind und damit auch die Umrüstung vorhandener Systeme erheblich vereinfacht ist.

Zur Lösung dieser Aufgabe sind erfindungsgemäß spezielle Verteiler vorgesehen, wobei die mit Steckverbindern zum Einschalten in die Stromversorgungs- und Bus-Leitung versehenen Verteiler mit eingebauten Bus-Kopplern und von diesen angesteuerten, in einem Stromversorgungsabzweig liegenden Schaltgliedern, sowie mit nachgeordneten Ausgangssteckverbindern für eine herkömmliche Versorgungsverdrahtung zu den Verbrauchern versehen sind.

Gemäß der vorliegenden Erfindung wird also nicht der einzelne Verbraucher mit einem Bus-Koppler ausgerüstet, sondern man verlegt diese Auskopplung in den Verteiler, so daß die herkömmlichen Verbraucher nach dem neuen Bus-System betrieben werden können. Dies bedeutet nicht etwa nur eine Verlagerung des Orts der Bus-Koppler, beispielsweise von der Leuchte zum Verteiler, sondern man hat ja in den weitaus meisten Fällen Schaltvorgänge, bei denen eine ganze Gruppe von Geräten gemeinsam geschaltet werden und dies läßt sich erfindungsgemäß durch das Vorsehen eines speziellen Verteilers mit nur einem Bus-Koppler für diese ganze Gruppe realisieren, während man bislang diese ganze Verbrauchergruppe einzeln mit solchen Bus-Kopplern ausgerüstet hatte.

Der erfindungsgemäße Verteiler kann sowohl als Endstück als auch, in den weitaus meisten Fällen, als Durchgangsverteiler mit Ein- und Ausgangssteckverbindern ausgebildet sein.

In weiterer Ausgestaltung der Erfindung kann der Bus-Koppler mehrere Analog- und/oder Digitaleingänge für Informationsrückkopplung vom Verbraucher aufweisen, so daß beispielsweise je nach der Temperatur, der Helligkeit od.dgl. am Ort des Verbrauchers entsprechende Schaltvorgänge im Verteiler ausgelöst bzw. Informationen über die Bus-Leitung in die Steuerzentrale zurückgemeldet werden.

Schließlich liegt es auch noch im Rahmen der Erfindung, eine von Hand schaltbare Überbrückung der Bus-gesteuerten Stromversorgung im Verteiler zu den Ausgangssteckverbindern für die Verbraucher vorzusehen, so daß bei etwaigen Störungen in der Bus-Leitung oder im zentralen Steuersystem eine herkömmliche Stromversorgung für die Verbraucher sichergestellt ist, die dann wie üblich nach wie vor jeweils am Ort selbst von Hand geschaltet werden können.

Weitere Vorteile, Merkmale und Einzelheiten der Erfindung ergeben sich aus der nachfolgenden Beschreibung eines Ausführungsbeispiels anhand eines schematisch dargestellten Verteilers.

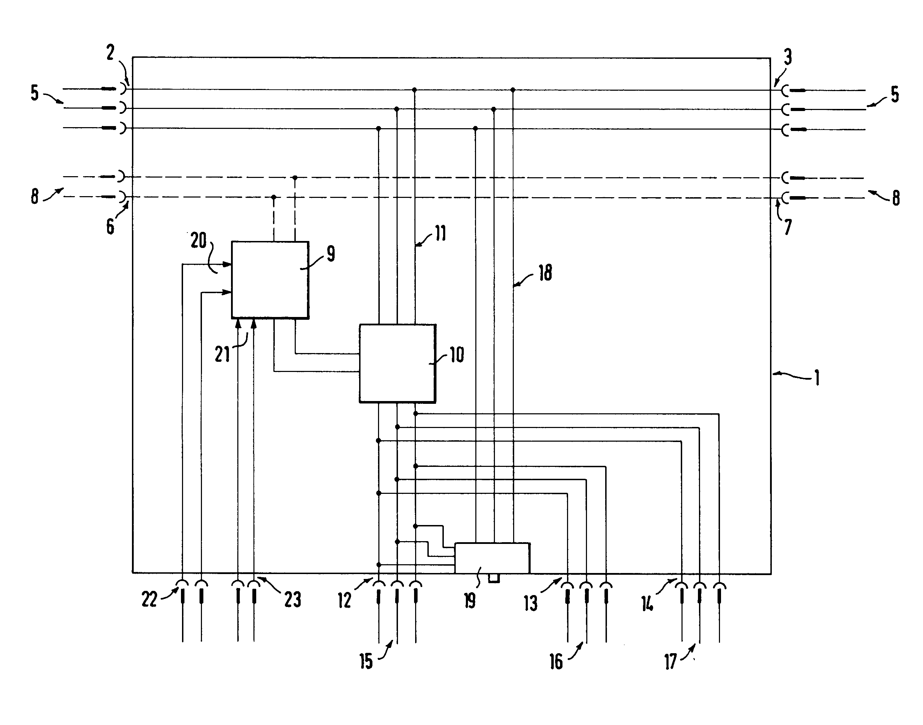

Der in der Zeichnung dargestellte als Durchgangsverteiler ausgebildete Verteiler 1 weist einen dreipoligen Eingangssteckverbinder 2 und einen dreipoligen Ausgangssteckverbinder 3 zum Einschalten in die dreipolige Stromversorgungsleitung 5 sowie einen zweipoligen Eingangssteckverbinder 6 und einen zweipoligen Ausgangssteckverbinder 7 zum Einschalten in die Bus-Leitung 8 auf. Im Verteiler 1 ist ein Bus-Koppler 9 angeordnet, der an die durchgeschleifte Bus-Leitung 8 angekoppelt ist und dessen Ausgang mit einem Schaltglied 10 versehen ist, welches in den Stromabzweig 11 von der durchgeschleiften Stromleitung 5 zu den Ausgangssteckverbindern 12, 13 und 14 eingeschaltet ist. Dabei handelt es sich um Ausgangssteckverbinder für eine herkömmliche Versorgungsverdrahtung zu den Verbrauchern mit Hilfe dreiadriger Kabel 15, 16 und 17. Im dargestellten Ausführungsbeispiel handelt es sich beispielsweise um die Ansteuerung dreier Rollos oder dreier Leuchtenfelder od.dgl., die in gleicher Weise über die Bus-Leitung 8 ferngesteuert werden sollen, wobei durch die erfindungsgemäße Einbeziehung des Bus-Kopplers 9 in den Verteiler nur ein Bus-Koppler für diese drei Leuchtenfelder oder Rollogruppen erforderlich ist, während bei der bisherigen Ausgestaltung solcher Bus-Steuerungen jeder einzelne einen Bus-Koppler benötigt hätte. Parallel zu dem vom Bus-Koppler gesteuerten Stromabzweig mit dem Schaltglied 10 ist eine Stromüberbrückungsleitung 18 vorgesehen, die unter Zwischenschaltung eines von Hand betätigbaren Schalters 19 direkt an die Ausgangssteckverbinder 12, 13, 14 für die Verbraucher gelegt werden kann, um beispielsweise bei Störungen im Bus-System quasi unter Bildung eines herkömmlichen elektrischen Installationssystems die Stromverbindung zu den Verbrauchern sicherzustellen, die dann selbstverständlich jeweils am Ort einzeln geschaltet werden müßten.

Der Bus-Koppler 9 ist im dargestellten Ausführungsbeispiel mit zwei Analogeingängen 20 und zwei Digitaleingängen 21 versehen, wobei zur Ansteuerung dieser Eingänge in der Verteilerwand entsprechende Eingangssteckverbinder 22 und 23 angeordnet sind.

Die Erfindung ist nicht auf das dargestellte Ausführungsbeispiel beschränkt. Neben der Möglichkeit, auch Verteiler vorzusehen, die nicht als Durchgangsverteiler ausgebildet sind, könnten selbstverständlich innerhalb eines Verteilers eine Mehrzahl von Bus-Kopplern vorgesehen sein, die jeweils unterschiedlichen Verbrauchergruppen zugeordnet sind und denen selbstverständlich jeweils auch wieder eigene Schaltglieder nachgeordnet sind.

## Patentansprüche

1. Verteiler für ein elektrisches Installationssystem zur gleichzeitigen Energieübertragung sowie zur Steuerung der Verbraucher über eine Datenleitung mit serieller digitaler Datenübertragung (Bus-Leitung), wobei die Steuerinformation über Bus-Koppler von der Bus-Leitung abgenommen und zum Schalten der Leistungsversorgung für die jeweiligen Verbraucher benutzt wird, dadurch gekennzeichnet, daß die mit Steckverbindern (2, 3; 6, 7) zum Einschalten in die Stromversorgungsleitung (5) und die Bus-Leitung (8) versehenen Verteiler (1) mit eingebauten Bus-Kopplern (9) und von diesen angesteuerten, in einem Stromversorgungsabzweig (11) liegenden Schaltgliedern (10) sowie mit nachgeordneten Ausgangssteckverbindern (12, 13, 14) für eine herkömmliche Versorgungsverdrahtung zu den Verbrauchern versehen sind.

2. Verteiler nach Anspruch 1, dadurch gekennzeichnet, daß er als Durchgangsverteiler mit Eingangssteckverbindern (2, 6) und Abgangssteckverbindern (3, 7) ausgebildet ist.

3. Verteiler nach Anspruch 1, dadurch gekennzeichnet, daß der Bus-Koppler (9) mehrere Analog- und/oder Digitaleingänge (20, 21) für Informationsrückkopplung von den Verbrauchern aufweist.

4. Verteiler nach einem der Ansprüche 1 bis 3, gekennzeichnet durch eine von Hand schaltbare Überbrückung (18) der Bus-gesteuerten Stromversorgung zu den Ausgangssteckverbindern (12, 13, 14) zu den Verbrauchern.
